(19) **Europäisches Patentamt / European Patent Office / Office européen des brevets**

(11) **EP 2 576 157 B1**

(12) **FASCICULE DE BREVET EUROPEEN**

(45) Date de publication et mention de la délivrance du brevet:
**25.05.2016 Bulletin 2016/21**

(51) Int Cl.:
**B25J 9/16** (2006.01)

(21) Numéro de dépôt: **11721558.2**

(22) Date de dépôt: **27.05.2011**

(86) Numéro de dépôt international:
**PCT/EP2011/058746**

(87) Numéro de publication internationale:
**WO 2011/151264 (08.12.2011 Gazette 2011/49)**

(54) **PROCEDE D'IDENTIFICATION DE FROTTEMENTS DANS UNE ARTICULATION DE BRAS DE ROBOT OU DE BRAS MANIPULATEUR, ET PROCEDE DE COMPENSATION DE COUPLE FAISANT APPLICATION**

VERFAHREN ZUR ERKENNUNG VON REIBUNG BEI EINEM DREHGELENK EINES ROBOTERARMS ODER MANIPULATORARMS SOWIE SEINE VERWENDUNG FÜR EIN DREHMOMENTAUSGLEICHSVERFAHREN

METHOD FOR IDENTIFYING FRICTION IN A HINGE OF A ROBOT ARM OR MANIPULATOR ARM, AND USE THEREOF IN A TORQUE COMPENSATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2010 FR 1002347**

(43) Date de publication de la demande:
**10.04.2013 Bulletin 2013/15**

(73) Titulaire: **Commissariat à l'Énergie Atomique et aux Énergies Alternatives 75015 Paris (FR)**

(72) Inventeur: **GARREC, Philippe F-91190 Gif sur Yvette (FR)**

(74) Mandataire: **Parzy, Benjamin Alain Cabinet Boettcher 16, rue Médéric 75017 Paris (FR)**

(56) Documents cités:
**DE-A1-102007 024 143    US-A1- 2009 076 653**

**Description**

L'invention est relative à un procédé d'identification de frottements dans une articulation de bras de robot ou de bras manipulateur, et un procédé de compensation faisant application. L'invention est par exemple utile pour la détection d'une interaction du manipulateur avec son environnement (contact, intervention humaine) indépendamment de la charge ou pour pouvoir déplacer le manipulateur manuellement avec une résistance indépendante du sens de déplacement et de la charge (téléopération, cobotique).

ARRIERE-PLAN TECHNOLOGIQUE DE L'INVENTION

Dans un système de téléopération utilisant des manipulateurs maître et esclave mécaniquement réversibles, il est connu d'utiliser le moteur pour compenser l'effet de la gravité sur la portion de bras en aval de l'articulation. A cet effet, le moteur est commandé pour développer un couple qui compense le couple gravitaire. Ainsi compensé, l'articulation est plus facile à manipuler et il suffit en particulier à l'opérateur d'exercer sur l'articulation un couple seulement égal au couple de frottement pour provoquer un mouvement de l'articulation dans un sens ou dans un autre.

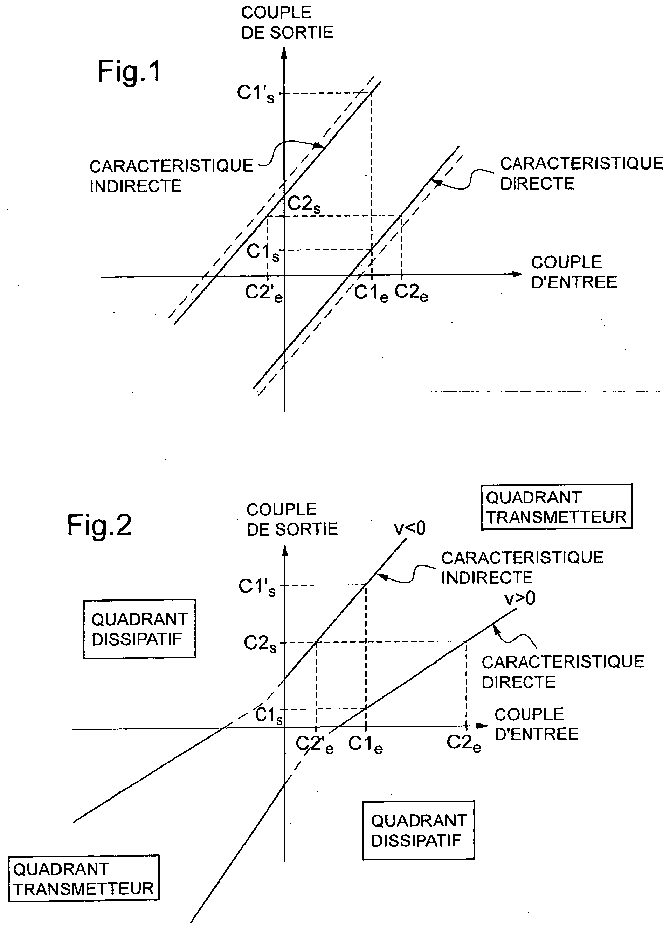

Il est connu d'établir un modèle de comportement d'une telle articulation en faisant l'hypothèse d'un frottement sec (ou frottement de Coulomb) constant, donc indépendant de la charge. Un procédé d'identification d'un tel modèle est notamment exposé dans le document US-A1-2009/0076653, considéré comme état de la technique le plus proche. Cet état de la technique est décrit en relation avec la figure 1, qui représente un diagramme de transfert d'un mécanisme réversible (abscisse : couple d'entrée ; ordonnée : couple de sortie) où les caractéristiques, dans l'hypothèse d'un frottement sec constant, sont des droites parallèles décalées symétriquement par rapport à l'origine. Le frottement correspond implicitement à la différence entre l'une des caractéristiques et une droite du rapport de réduction parallèle qui passerait par l'origine. Les droites pointillées correspondent à la force de décollement pour chaque sens de sollicitation (coefficient de frottement dit «statique») et les droites en trait plein à la force d'équilibre à faible vitesse (coefficient de frottement dit « cinématique » ou «dynamique»).

Lorsque l'énergie est transmise de l'entrée (moteur entraînant) vers la sortie (charge résistante), la caractéristique est qualifiée de «directe» et d' «indirecte» dans le cas contraire. Pour fixer les idées, la caractéristique directe correspond par exemple à la montée du bras à l'encontre de son propre poids et de celui de la charge, tandis que la caractéristique indirecte représente une descente du bras. Pour cette raison chaque droite est divisée en deux segments séparés par un point pivot situé dans le quadrant dissipatif. Il y donc au total quatre segments de droites en pointillés et quatre segments de droites en traits pleins.

Ce diagramme est à lire comme suit : pour un couple d'entrée donné Cle, on obtiendra un couple de sortie C1s lors d'un fonctionnement dans le sens direct (par exemple la montée du segment de bras raccordé à l'articulation), et un couple de sortie C1s' lors d'un fonctionnement dans le sens indirect (par exemple la descente du segment de bras raccordé à l'articulation. Réciproquement, pour un couple de sortie donné C2s, il faudra développer un couple C2e pour un fonctionnement dans le sens direct, et un couple C2e' dans le sens indirect.

Cependant une compensation basée sur le modèle de la figure 1 ne donne pas satisfaction en pratique. En effet, à l'usage, on ressent une certaine asymétrie, croissante avec la charge, selon que l'articulation fonctionne dans un sens direct ou indirect, ce qui peut être gênant pour la sensation de l'opérateur.

OBJET DE L'INVENTION

L'invention a pour objet un procédé d'identification d'un modèle rendant plus fidèlement compte du comportement de l'articulation et son utilisation pour améliorer d'une part la compensation par la commande du couple de gravité et d'autre part la détection d'une interaction du robot avec l'extérieur).

BREVE DESCRIPTION DE L'INVENTION

A cet effet, on propose un procédé d'identification du comportement d'une articulation de bras de robot ou de bras manipulateur, le procédé comportant l'étape de choisir un modèle de comportement liant le couple d'entrée et le couple de sortie de l'articulation dépendant de paramètres de fonctionnement, de faire fonctionner l'articulation de façon à mesurer plusieurs points de fonctionnement (couple d'entrée/couple de sortie), et d'effectuer une régression pour identifier les paramètres du modèle et ainsi déterminer au moins l'une des caractéristiques directes et indirectes de l'articulation, et dans lequel, selon l'invention, le modèle de comportement retenu comprend un frottement sec ayant une première composante indépendante du couple de sortie et une deuxième composante dépendant du couple de sortie de l'articulation.

Ainsi, l'identification permet d'établir des caractéristiques de frottement dans un diagramme en couple d'entrée/couple de sortie qui ne sont plus nécessairement parallèles, mais à double pente, ou biconique.

Ceci s'explique par le fait que lorsque le rendement diffère de l'unité, le modèle de la figure 1 n'est plus conforme à la théorie de Coulomb qui prévoit que le frottement sec dépend de l'intensité de réaction de contact entre les pièces en mouvement et partant de la charge transmise (notion de rendement classique des manuels de mécanique). Or, dans les manipulateurs industriels par exemple il est fréquent que ce rendement soit très différent de l'unité et dans ce cas la compensation précédente est d'autant plus défectueuse que la charge augmente. En conséquence un effort de contact par exemple sera incorrectement évalué et en cas d'utilisation en téléopération ou en cobotique (mode dit transparent), l'effort de déplacement sera non seulement asymétrique pour les deux sens mais aussi dépendant de la charge soutenu par le manipulateur.

Ceci conduit à une allure non plus parallèle des caractéristiques directe et indirecte mais biconique. L'adoption d'un modèle biconique modifie aussi l'évaluation des forces d'inertie et donc les paramètres du modèle dynamique. Les termes d'inertie du modèle dynamique classique sont pondérés par le rendement direct ou indirect. Au contraire avec le modèle de la figure 1, les paramètres sont donc faussés d'autant plus que le rendement est faible.

Selon un aspect particulier de l'invention, on fait dépendre en outre le frottement sec d'un paramètre représentatif de la vitesse de mouvement de l'articulation. De préférence, au moins l'une des composantes du frottement sec comporte une partie constante et une partie dépendant d'un terme de relaxation exponentielle fonction du paramètre de vitesse.

Ce modèle plus perfectionné est plus particulièrement adapté dans le cas où le rendement de la transmission s'améliore lorsque la vitesse croît. Ce phénomène est notamment observé dans le cas d'un réducteur à engrenage lubrifié à l'huile est très important aux basses vitesses utilisées précisément en manipulation téléopérée. L'augmentation de la vitesse se traduit sur le diagramme précédemment décrit par un écartement des caractéristiques. L'augmentation du rendement avec la vitesse va donc se traduire par l'écartement et le redressement de la pente des caractéristiques.

Selon l'invention, on met à profit ce nouveau modèle pour mettre en oeuvre des compensations dans l'articulation. En particulier, on propose un procédé de commande d'une articulation de bras manipulateur pouvant fonctionner en sens direct et en sens indirect, le procédé de compensation comprenant les étapes de

- identifier des caractéristiques de fonctionnement directes et indirects de l'articulation dans un plan couple d'entrée/couple de sortie, en utilisant le modèle de frottement sec de l'invention ;
- exercer sur l'articulation un couple de compensation de sorte à ramener le point d'équilibrage de l'articulation au voisinage d'une médiane des caractéristiques directe et indirecte de l'articulation ainsi déterminées.

La prise en compte des rendements direct et indirect pour établir les caractéristiques de fonctionnement, qui donne lieu à des caractéristiques de pentes distinctes, et le choix de ramener le point d'équilibrage non par sur une parallèle passant par l'origine mais sur une médiane des caractéristiques conduit à une compensation qui gomme mieux les effets d'asymétrie précités, ce qui conduit à un fonctionnement de l'articulation plus transparent pour l'utilisateur.

## BREVE DESCRIPTION DES FIGURES

L'invention sera mieux comprise à la lumière de la description qui suit en référence aux figures des dessins annexés, parmi lesquelles :

- la figure 2 représente les caractéristiques directe et indirecte d'une articulation lorsqu'il est tenu compte des rendements directs et indirects distincts ;
- la figure 3 représente le principe de compensation de l'invention, consistant à ramener le point d'équilibrage sur la médiane des caractéristiques réelles ;
- la figure 4 représente le principe de compensation des frottements selon un mode particulier de mise en oeuvre de l'invention.

## DESCRIPTION DES FIGURES

L'invention repose sur le choix d'un modèle de frottement dans lequel, comme cela est illustré à la figure 2, les caractéristiques de fonctionnement de l'articulation ne sont plus parallèles. La pente de la caractéristique directe est proportionnelle au rendement de l'articulation quand elle fonctionne dans le sens direct, et la pente de la caractéristique indirecte est proportionnelle au rendement de l'articulation quant elle fonctionne dans le sens indirect, les deux pentes étant dès lors distinctes puisque les rendements direct et indirect sont distincts.

De plus, les caractéristiques changent d'angle lorsque l'on passe du premier quadrant au troisième quadrant du diagramme. On obtient ainsi une zone de frottement non plus en forme de bande, mais en forme de diabolo (les raccordements entre les demi-caractéristiques sont par convention définis par prolongation des caractéristiques dans les quadrants dissipatifs).

Ce diagramme est bien sûr à lire comme celui de la figure 1. Pour un couple d'entrée donnée C1e, on obtiendra un couple de sortie C1s lors d'un fonctionnement dans le sens direct (par exemple la montée du segment de bras raccordé à l'articulation), et un couple de sortie C1s' lors d'un fonctionnement dans le sens indirect (par exemple la descente du segment de bras raccordé à l'articulation. A l'inverse, pour un couple de sortie donné C2s, il faudra développer un couple C2e pour un fonctionnement dans le sens direct, et un couple C2e' dans le sens indirect.

Plus précisément, le modèle utilisé pour l'identification qui conduit à ces caractéristiques fait dépendre le frottement sec de la charge subie par l'articulation (donc de son couple de sortie). Ainsi, on introduit dans le frottement sec, outre une composante constante, une composante qui dépend de la valeur absolue de la charge, par exemple proportionnellement à celle-ci. Si Cs est la charge subie par l'articulation, le frottement sec s'écrit alors :

$$ Fc = \left(\beta + \alpha |Cs|\right) \cdot signe(\dot{q}) $$

où $\alpha$ est un coefficient de proportionnalité, $\beta$ la composante constante, et $\dot{q}$ un paramètre de vitesse de mouvement de l'articulation, par exemple la vitesse de rotation de l'articulation. Ainsi, le frottement sec comporte maintenant une première composante indépendante de la charge de sortie, et une deuxième composante qui dépend de la charge de sortie, en l'occurrence ici de façon proportionnelle.

On notera que la composante du frottement sec variable avec la charge peut s'écrire :

$$ \alpha |Cs| \cdot signe(\dot{q}) = \alpha \cdot Cs \cdot signe(Cs) \cdot signe(\dot{q}) = \alpha \cdot Cs \cdot signe(Ps) $$

où $Ps = Cs \cdot \dot{q}$ est la puissance de sortie.

Dans une version encore plus précise du modèle de l'invention, particulièrement adaptée au fonctionnement de l'articulation à faible vitesse, on fait dépendre le frottement sec de la vitesse de mouvement de l'articulation, de préférence suivant la loi :

$$ Fc = \left(\left(a + b \cdot e^{-|\dot{q}|/v}\right)|Cs| + \left(c + d \cdot e^{-|\dot{q}|/v}\right)\right) \cdot signe(\dot{q}) $$

où a,b,c,d sont des coefficients constants et v une constante de vitesse.

On intégrera ce modèle de frottement, valable pour une vitesse non nulle, dans un modèle frottement de Stribeck qui tient compte de frottement d'adhérence à vitesse nulle.

Muni d'un tel modèle, il suffit alors, selon des méthodes d'identification connues, de faire fonctionner l'articulation et de mesurer les couples d'entrée et de sortie pour divers points de fonctionnement, aussi bien dans un fonctionnement direct que dans un fonctionnement indirect. Une régression permet alors d'identifier les coefficients utilisés dans le modèle, conduisant aux caractéristiques dessinées sur la figure 2. Bien sûr, ces caractéristiques correspondent à une vitesse donnée. Si la vitesse retenue est plus grande, les caractéristiques seront plus écartées et plus redressées.

Ces caractéristiques sont plus conformes au comportement réel de l'articulation, et permettent de réaliser une compensation plus performante. En effet, une telle articulation est en général équipée d'un moteur dont l'une des fonctions est de compenser le couple dû au poids de la portion de bras aval, ou couple gravitaire. Le couple de compensation du moteur Ccomp est réglé de façon que, en l'absence de toute sollicitation externe, le bras reste à l'équilibre dans la bande de frottement s'étendant entre les deux caractéristiques, de sorte qu'il soit stable et ne bouge pas sous l'effet de la gravité. A cet effet, on règle en général le couple du moteur pour qu'il soit égal au couple gravitaire divisé par le rapport de réduction du réducteur accouplé au moteur.

Bien sûr, la valeur de la compensation dépend de la masse de la charge portée par le bras, ainsi que de la posture du bras dans l'espace. Il convient de modifier en temps réel le couple de compensation pour qu'à tout instant le couple gravitaire soit contré de façon adéquate.

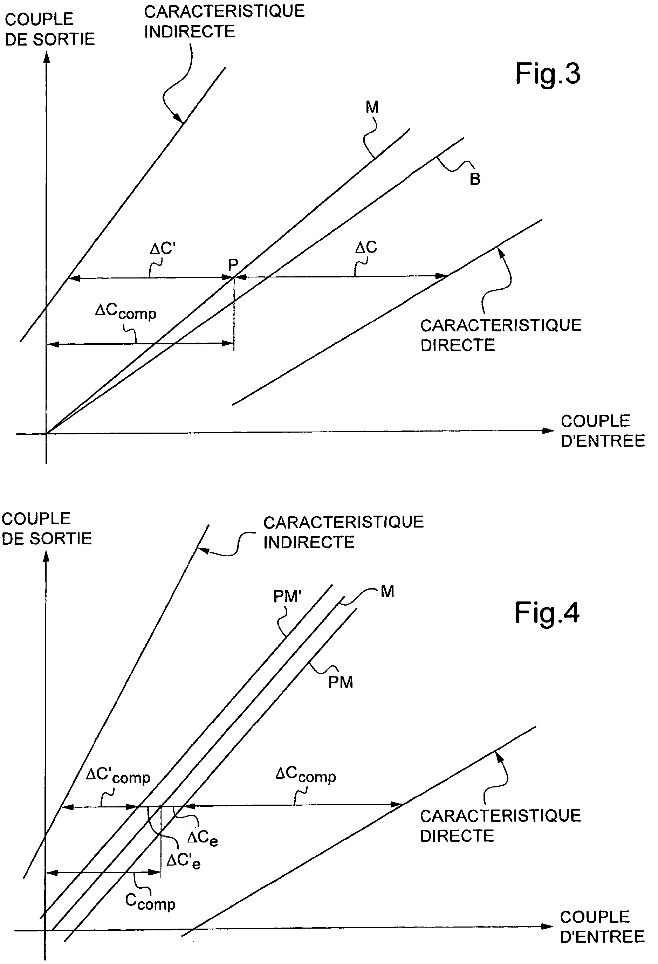

On a représenté sur la figure 3 l'effet de la compensation selon l'invention. On choisit ici de ramener le point de fonctionnement de l'articulation sur la médiane M des deux caractéritistique, qui est le lieu des points d'équilibrage P, c'est-à-dire le lieu des points à égale distance des deux caractéristiques, la distance étant comptée parallèlement à l'axe des couples d'entrée. Le couple de compensation Ccomp exercé par le moteur est compté entre l'axe vertical et le point P. Ainsi, pour un couple de sortie donné Cs, il faudra développer un couple égal à l'incrément ΔCe pour un fonctionnement dans le sens direct, et un couple égal à l'incrément ΔCe' dans le sens indirect (ces deux couples étant opposés), les deux incréments étant maintenant comptés à partir d'un point d'équilibrage P situé sur la médiane M. On observera que le choix de compenser sur la médiane conduit à des incréments de couples qui sont égaux en valeur absolue, ce qui symétrise le fonctionnement de l'articulation. La situation eût été différente, si, suivant le premier réflexe de l'homme du métier, il aurait été visé de ramener le point de fonctionnement non pas sur la médiane, mais sur la bissectrice B des deux caractéristiques.

On notera que la médiane en question est la médiane des ordonnées, c'est-à-dire la médiane qui se construit en retenant sur chaque ligne parallèle à l'axe des ordonnées le point milieu des intersections de cette ligne avec les caractéristiques directes et indirectes.

La compensation décrite ci-dessus est de préférence une compensation permanente, qui est active y compris lorsque le bras n'est pas manipulé ou sollicité extérieurement.

En pratique, on pourra ajuster cette compensation par une simple procédure. A partir d'un couple de compensation donné, On mesure les couples nécessaires pour faire bouger l'articulation dans un sens et dans l'autre. Si ces couples sont différents, on modifie le couple de compensation dans le sens adéquat et y ajoutant ou retranchant la moitié de la différence entre les deux couples mesurés. Et ainsi de suite jusqu'à ce que la différence entre les deux couples mesurés soient identiques entre eux à une erreur donnée près. Lors de cette procédure d'ajustement de la compensation, le mouvement du bras autour de l'articulation est provoqué par le moteur qui génère les couples nécessaires pour faire bouger l'articulation dans un sens et dans l'autre. Il convient bien sûr de répéter cette procédure d'ajustement régulièrement pour garantir que le bras est compensé en toutes circonstances. En particulier, on pourra déclencher la procédure d'ajustement de la compensation toutes les fois qu'en l'absence de sollicitation extérieure, le bras se met à bouger sous l'effet du couple de compensation développé par le moteur.

On peut en outre, toujours dans le cadre de l'invention, ajouter à cette compensation permanente Ccomp une compensation complémentaire $\Delta$Ccomp qui permet de compenser au moins partiellement les frottements, de l'articulation, lorsque l'opérateur est en train de solliciter l'articulation. A cet effet, on observe le signe de la vitesse de déplacement induit par l'action de l'opérateur, et on compense à l'aide du moteur au moins une partie du couple de frottement résistant qui s'oppose au mouvement généré par l'action de l'opérateur. En pratique, il convient d'éviter de compenser intégralement le frottement, pour laisser subsister une zone de frottements autour de la médiane M afin d'assurer une stabilité inconditionnelle de l'articulation autour de la position d'équilibrage compensée.

Le résultat de cette compensation complémentaire est visible à la figure 4. Dès que la mise en mouvement et son sens ont été repérés, le moteur va, en plus du couple de compensation, exercer un couple de compensation complémentaire égal au couple $\Delta$Ccomp (respectivement $\Delta$Ccomp') compté entre la caractéristique concernée et une parallèle à la médiane M (droites PM et PM', respectivement), de sorte que le couple nécessaire pour faire bouger l'articulation est maintenant réduit à un couple $\Delta$Ce (respectivement $\Delta$Ce') compté entre la médiane et la parallèle correspondante.

Ainsi, l'utilisateur a l'impression de manipuler une articulation avec une zone morte de frottement très réduite. Il est avantageux cependant de ne pas annuler entièrement cette zone morte, pour laisser subsister une zone de stabilité inconditionnelle dans laquelle l'articulation reste au repos en l'absence de sollicitation extérieure.

L'invention n'est pas limitée à ce qui vient d'être décrit, mais englobe au contraire toute variante entrant dans le cadre défini par les revendications. En particulier, bien qu'ici le couple perturbateur qui est compensé est le poids de la partie du bras manipulateur en aval de l'articulation, on pourra bien sûr compenser d'autres couples perturbateurs. Par ailleurs, si l'articulation est équipée d'un organe de compensation de couple (par exemple un ressort), il conviendra alors d'en tenir compte dans la compensation. En outre, bien qu'ici l'articulation soit réversible (pentes positives des caractéristiques), ce qui vient d'être décrit s'applique également pour une articulation irréversible pour laquelle la pente de la caractéristique indirecte est négative et qui serait dotée d'un capteur d'effort à sa sortie. Dans ce cas on cherchera à symétriser l'action de la commande du moteur en choisissant la médiane calculée en entrée (axe des abscisses) ou à tout le moins à son voisinage.

## Revendications

1. Procédé d'identification du comportement d'une articulation de bras de robot ou de bras manipulateur, le procédé comportant l'étape de choisir un modèle de comportement liant le couple d'entrée et le couple de sortie de l'articulation dépendant de paramètres de fonctionnement, de faire fonctionner l'articulation de façon à mesurer plusieurs points de fonctionnement couple d'entrée/couple de sortie, et d'effectuer une régression pour identifier les paramètres du modèle et ainsi déterminer au moins l'une des caractéristiques directe ou indirecte de l'articulation, **caractérisé en ce que** le modèle de comportement retenu comprend un frottement sec ayant une première composante indépendante du couple de sortie et une deuxième composante dépendant du couple de sortie de l'articulation.

2. Procédé d'identification selon la revendication 1, dans lequel on fait dépendre en outre le frottement sec d'un paramètre représentatif de la vitesse de mouvement de l'articulation.

3. Procédé d'identification selon la revendication 2, dans lequel au moins l'une des composantes du frottement sec comporte une partie constante et une partie dépendant exponentiellement du paramètre de vitesse.

4. Procédé de compensation d'un couple perturbateur qui s'exerce sur une articulation de bras manipulateur pouvant fonctionner en sens direct et en sens indirect, le procédé de compensation comprenant les étapes de :

- mettre en oeuvre le procédé d'identification selon l'une des revendications précédentes pour identifier les caractéristiques directe et indirecte de l'articulation ;
- exercer sur l'articulation un couple de compensation (Ccomp) de sorte à ramener le point d'équilibrage (P) de l'articulation au voisinage d'une médiane (M) des ordonnées des caractéristiques directe et indirecte de l'articulation ainsi déterminées.

5. Procédé selon la revendication 4, dans lequel le couple de compensation est exercé par un moteur équipant l'articulation.

6. Procédé selon la revendication 4, dans lequel, en plus du couple de compensation, on exerce sur l'articulation un couple de compensation complémentaire ($\Delta$Ccomp, $\Delta$C'comp) pour compenser au moins partiellement les frottements dans l'articulation.

## Patentansprüche

1. Verfahren zur Identifizierung des Verhaltens einer Roboterarm- oder Manipulatorarm-Gelenkverbindung, wobei das Verfahren den Schritt des Auswählens eines Verhaltensmodells umfasst, welches das Eingangsmoment und das Ausgangsmoment der Gelenkverbindung abhängig von Betriebsparametern miteinander verknüpft, des Betätigens der Gelenkverbindung derart, dass mehrere Betriebspunkte Eingangsmoment/Ausgangsmoment gemessen werden, und des Durchführens einer Regression, um die Parameter des Modells zu identifizieren und so mindestens eine der direkten oder indirekten Kennlinien der Gelenkverbindung zu bestimmen, **dadurch gekennzeichnet, dass** das ausgewählte Verhaltensmodell eine trockene Reibung umfasst, die eine vom Ausgangsmoment unabhängige erste Komponente und eine vom Gelenkverbindungsausgangsmoment abhängige zweite Komponente hat.

2. Verfahren zur Identifizierung nach Anspruch 1, wobei man ferner die trockene Reibung von einem Parameter abhängig macht, der repräsentativ für die Bewegungsgeschwindigkeit der Gelenkverbindung ist.

3. Verfahren zur Identifizierung nach Anspruch 2, wobei mindestens eine der Komponenten der trockenen Reibung einen konstanten Teil und einen exponentiell vom Geschwindigkeitsparameter abhängigen Teil umfasst.

4. Verfahren zum Ausgleich eines Störmoments, das auf eine Manipulatorarm-Gelenkverbindung ausgeübt wird, die in direkter Richtung und in indirekter Richtung arbeiten kann, wobei das Ausgleichsverfahren die Schritte umfasst:

- Durchführen des Identifizierungsverfahrens nach einem der vorhergehenden Ansprüche, um die direkte und die indirekte Kennlinie der Gelenkverbindung zu identifizieren;
- Ausüben eines Ausgleichsmoments (Ccomp) auf die Gelenkverbindung derart, dass der Gleichgewichtspunkt (P) der Gelenkverbindung in die Nähe einer Mittelachse (M) der Ordinaten der so bestimmten direkten und indirekten Kennlinien der Gelenkverbindung gebracht wird.

5. Verfahren nach Anspruch 4, wobei das Ausgleichsmoment von einem Motor ausgeübt wird, mit dem die Gelenkverbindung ausgestattet ist.

6. Verfahren nach Anspruch 4, wobei zusätzlich zum Ausgleichsmoment ein komplementäres Ausgleichsmoment ($\Delta$Ccomp, $\Delta$C'comp) auf die Gelenkverbindung ausgeübt wird, um die Reibungen in der Gelenkverbindung zumindest teilweise auszugleichen.

## Claims

1. An identification method for identifying the behavior of a hinge of a robot arm or of a manipulator arm, the method comprising the steps of selecting a behavior model linking the input torque and the output torque of the hinge depending on operating parameters, and of operating the hinge in such a manner as to measure several input torque/output torque operating points, and of performing a regression in order to identify the parameters of the model and thus to determine at least one of the direct or indirect characteristics of the hinge, wherein the behavior model retained includes dry friction having a first component that does not depend on the output torque, and a second component that does depend on the output torque of the hinge.

2.  An identification method according to claim 1, wherein the dry friction is further made to depend on a parameter representative of the speed of movement of the hinge.

3.  An identification method according to claim 2, wherein at least one of the dry friction components includes a constant portion and a portion depending exponentially on the speed parameter.

4.  A method of compensating disturbing torque exerted on a hinge of a manipulator arm being able to operate in the direct direction and in the indirect direction, the compensation method comprising the steps of:

    · implementing the identification method according to claim 1 in order to identify the direct and indirect characteristics of the hinge; and
    · exerting a compensation torque ($C_{comp}$) on the hinge in such a manner as to position the equilibrium point (P) of the hinge in the vicinity of a median (M) of the ordinate of the direct and indirect characteristics of the hinge as determined in this way.

5.  A method according to claim 4, wherein the compensation torque is exerted by a motor fitted on the hinge.

6.  A method according to claim 4, wherein in addition to the compensation torque, an additional compensation torque ($\Delta Ccomp$, $\Delta C'comp$) is exerted on the hinge in order to compensate the friction in the hinge at least in part.

Fig.1

COUPLE
DE SORTIE

C1'ₛ

CARACTERISTIQUE
INDIRECTE

CARACTERISTIQUE
DIRECTE

C2ₛ

C1ₛ

C2'ₑ    C1ₑ C2ₑ

COUPLE
D'ENTREE

Fig.2

COUPLE
DE SORTIE      v<0

QUADRANT
TRANSMETTEUR

CARACTERISTIQUE
INDIRECTE

C1'ₛ                        v>0

QUADRANT
DISSIPATIF

C2ₛ

CARACTERISTIQUE
DIRECTE

C1ₛ

C2'ₑ  C1ₑ         C2ₑ

COUPLE
D'ENTREE

QUADRANT
DISSIPATIF

QUADRANT
TRANSMETTEUR

EP 2 576 157 B1

Fig.3

Fig.4

9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090076653 A1